Europäisches Patentamt

European Patent Office

Office européen des brevets

(19)

(11) Veröffentlichungsnummer : **0 362 474 B1**

(12) # EUROPÄISCHE PATENTSCHRIFT

(45) Veröffentlichungstag der Patentschrift :
**17.03.93 Patentblatt 93/11**

(21) Anmeldenummer : **89110924.1**

(22) Anmeldetag : **16.06.89**

(51) Int. Cl.⁵ : **G01J 9/02,** G01J 11/00,
G01S 3/78

(54) Laserwarnempfänger.

(30) Priorität : **04.10.88 DE 3833635**

(43) Veröffentlichungstag der Anmeldung :
**11.04.90 Patentblatt 90/15**

(45) Bekanntmachung des Hinweises auf die
Patenterteilung :
**17.03.93 Patentblatt 93/11**

(84) Benannte Vertragsstaaten :
**FR GB IT**

(56) Entgegenhaltungen :
**DE-A- 3 231 025**
**JOURNAL OF THE ACOUSTICAL SOCIETY OF**
**AMERICA, Band 73, Nr. 5, Mai 1983, Seiten**
**1838-1841, Acoustical Society of America,**
**New York, US; R.L. JUNGERMAN et al.:**
**"Optical probing of acoustic waves on rough**
**surfaces"**
**IEEE J. QUANTUM ELECTRONICS, Band**
**QE-14, Nr. 2, Februar 1978, Seiten 108-111,**
**IEEE, New York, US; I.C. CHANG: "Laser de-**
**tection utilizing tunable acoustooptic filters"**

(56) Entgegenhaltungen :
**PROCEEDINGS OF SPIE, FIBER OPTIC AND**
**LASER SENSORS III, San Diego, CA, 20.-23.**
**August 1985, Seiten 2-15, SPIE, Washington,**
**US; R.P. DE PAULA: "Fiber optic sensor over-**
**view"**
**APPLIED OPTICS, Band 20, Nr. 14, 15. Juli**
**1981, Seiten 2337-2339; A. DANDRIDGE et al.:**
**"Noise reduction in fiber-optic interferometer**
**systems"**
**SOVIET JOURNAL OF QUANTUM ELECTRO-**
**NICS, Band 15, Nr. 3, März 1985, Seiten**
**426-428, American Institute of Physics, Wood-**
**bury, New York, US; A.F. BESSONOV et al.:**
**"Experimental investigation of the acoustoop-**
**tic interaction in a waveguide interferometer"**

(73) Patentinhaber : **Deutsche Aerospace**
**Aktiengesellschaft**
**Postfach 80 11 09**
**W-8000 München 80 (DE)**

(72) Erfinder : **Poisel, Hans, Dr.**
**Neustädter Strasse 6**
**W-8060 Dachau (DE)**
Erfinder : **Trommer, Gert, Dr.**
**Connollystrasse 16**
**W-8000 München 40 (DE)**

EP 0 362 474 B1

## Beschreibung

Die Erfindung bezieht sich auf einen Laserwarnempfänger mit Richtungsauflösung und einer Einrichtung zur Detektion von Fremdlicht und einfallender Laserstrahlung.

Beim Stand der Technik wird bisher Laserlicht dadurch von anderen Lichtquellen - Detonationslichtblitze, Sonnenstrahlen usw. - unterschieden, indem die Pulsanstiegszeit elektronisch untersucht wird (siehe 2.B DE-A-3 231 025). Bekanntlich rühren nur diejenigen Pulsfolgen, deren Einzelpulse sehr geringe Anstiegszeiten aufweisen, von Laserquellen. Es wird also nur diejenige Strahlung als Laserstrahlung interpretiert, die eine kürzere Pulsanstiegszeit als ein vorgegebener Schwellwert aufweist. Damit können aber nur gepulste Laserquellen erfaßt werden, bei CW-Lasern ist dies jedoch nicht mehr möglich.

Aus der Druckschrift IEEE J. QUANTUM ELECTRONICS, Band QE-14, Nr.2, Februar 1978, Seiten 108-111, IEEE, New York, US; I.C. CHANG : "Laser detection utilizing tunable acoustooptic filters" ist eine Anordnung bekannt zur Detektion von einfallender Laserstrahlung durch Erkennung von Kohärenter Strahlung in Anwesenheit inkohärenter Strahlung. Dort wird eine lasertypische große Kohärenzlänge mit einer schmalen Linienbreite - geringe Bandbreite der Wellenlänge - gleichgesetzt. Die Messung besteht in einer dynamischen Spektralanalyse des Wellenlängenspektrums der einfallenden Strahlung, wobei der Wellenlängenscan als differentiertes Ausgangssignal geliefert wird. Eine schmale Wellenlängen-Bandbreite einer Laserlinie bewirkt einen Peak im Ausgangssignal, während ein flacher Wellenlängenverlauf inkohärenter Strahlung ein nur geringes differenziertes Ausgangssignal liefert.

Der vorliegenden Erfindung liegt die Aufgabe zugrunde, einen Laserwarnempfänger zu schaffen, der einfallende Laserstrahlung sowohl gepulst als auch im CW-Betrieb erfassen und außerdem von Fremdlicht unterscheiden kann.

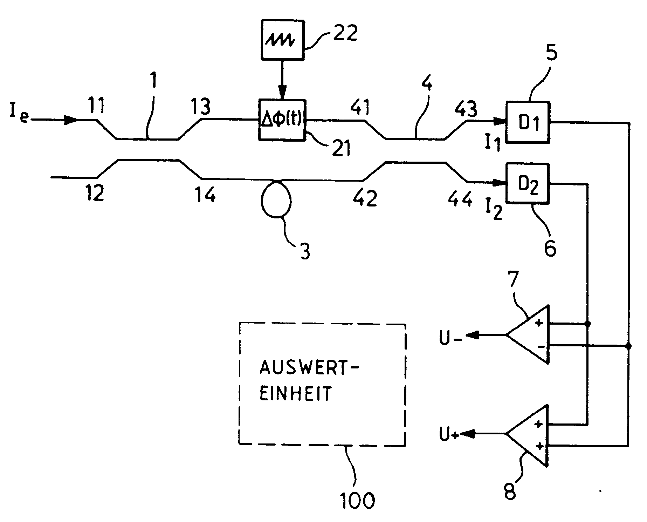

Diese Aufgabe wird durch die im Anspruch 1 aufgezeigten Maßnahmen gelöst. In den Unteransprüchen sind Ausgestaltungen und Weiterbildungen angegeben und in der nachfolgenden Beschreibung ist ein Ausführungsbeispiel erläutert und in der einzigen Figur der Zeichnung in einem Schaltbild skizziert.

Die in der Figur der Zeichnung dargestellte Einrichtung erlaubt nicht nur die Lösung der gestellten Aufgabe, sondern zusätzlich eine Ermittlung sowohl der Laser-Wellenlänge als auch der Pulsform einschließlich CW. Die Einrichtung ist also in der Lage, kohärente Anteile der zu detektierenden Strahlung von nichtkohärenten Anteilen zu unterscheiden. Wie bekannt, kann nur kohärente Strahlung von einem Laser stammen.

Das gezeigte Schaltbild der in einem Ausführungsbeispiel vorgeschlagenen Einrichtung veranschaulicht, wie das zu detektierende Licht der Intensität $I_e$ auf Eingang 11 des 3-dB-Kopplers 1 trifft, der das Licht gleichmäßig auf die beiden Ausgänge 13 und 14 aufteilt. Das Licht des Ausgangs 14 wird nun beispielsweise mit Hilfe eines dielektrischen Wellenleiters zu dem Eingang 42 eines zweiten 3-dB-Kopplers 4 geleitet, wobei der optische Weg zwischen 14 und 42 mittels einer Verzögerungsleitung 3 so gewählt ist, daß er länger oder kürzer (z.B. 5 mm) ist als der optische Weg des zweiten Lichtanteils zwischen Kopplerausgang 13 und zweiten Kopplereingang 41. Die Lange L ist so gewählt, daß die Wegdifferenz beider Lichtwege der minimalen Kohärenzlänge der interessierenden Lasertypen entspricht.

Der aus dem Kopplerausgang 13 austretende Lichtanteil wird zu einem Phasenschieber 21 geführt, welcher durch einen Signalgenerator 22 elektrisch gesteuert wird. Das am Eingang 41 des zweiten Kopplers 4 ankommende Licht weist daher eine zeitabhängige Phasenverschiebung $\Delta\Phi(t)$ auf. Die beiden in den Koppler 4 eintretenden Lichtanteile interferieren im Koppler miteinander. Der als Phasen/Amplituden-Transformer wirkende Koppler 4 liefert an seinen beiden Ausgängen 43 und 44 phasenabhängige Signale, die von den Fotodetektoren 5 und 6 in elektrische Signale umgewandelt werden. Die Signale $I_1$ und $I_2$ an den Detektoren $D_1$ und $D_2$ lauten dann :

$$I_1 = 1/2\, I_k\, (1 - \cos\Phi\,(t)) + 1/2\, I_i;$$
$$I_2 = 1/2\, I_k\, (1 + \cos\Phi\,(t)) + 1/2\, I_i;$$

Hierbei sind $I_i$ der inkohärente Anteil, $I_k$ der kohärente Anteil der ankommenden Strahlung mit $I_e = I_i + I_k$. Nur der kohärente Anteil kann mit sich wegen der optischen Wegdifferenz der zwei Lichtwege interferieren, während der andere nur Intensitäten addiert. Die Größe $\Phi(t)$ ist die zeitabhängige Phasendifferenz zwischen den beiden Lichtwegen 13 - 41 und 14 - 42. Die an den Verstärkern 7 und 8 entstehenden Signale $U_+$ und $U_-$ sind dann mit dem Verstärkungsfaktor v wie folgt zu definieren:

$$U_- = v \cdot I_k \cos(\Phi(t))$$
$$U_+ = v \cdot (I_i + I_k)$$

Die Phasenverschiebung $\Phi(t)$ setzt sich aus der optischen Wegdifferenz der beiden Lichtwege $\Delta\Phi_1 = n\Delta L\, 2\pi/\lambda$ und der durch den Phasenschieber erzeugten Phasendifferenz $\Delta\Phi(t) = \Delta n\, I\, 2\pi/\lambda$ zusammen.

$$\Phi(t) = (n\Delta L + \Delta n\,(t)\, I)\, 2\pi/\lambda\ ;$$

hierbei ist $\Delta L$ die Wegdifferenz der beiden Lichtwege und "I" die Länge des Phasenschiebers, dessen Brechzahl $\Delta n(t)$ vom Signalgenerator gesteuert, zeitlich verändert wird. Die Realisierung hierfür kann beispielsweise auf einer integriert-optischen Schaltung auf $Li\,Nb\,O_3$ erfolgen. Möglich ist auch eine auf einem Piezokristall aufgespannte Glasfaser, bei der sowohl die Brechzahl - durch mechanische Spannung - als auch die Länge I - durch Dehnung - variiert wird.

Variiert man $\Phi(t)$ z. B. als Sägezahnfunktion

$(\Delta n(t) = \Delta n_{max} . s . t)$ - hierbei $t < T_{max} -$ ,
so lautet U– während des stetig steigenden Teils des Sägezahns :

$U_- = vl_k \cos ( 2\pi/\lambda \ n\Delta L + 2\pi/\lambda \ l\Delta n_{max} . s . t )$.

Dies ist eine zeitlich periodische Schwingung der Frequenz $\Omega$.

$$\Omega = 2\pi l\Delta n_{max} \ s/\lambda.$$

Sorgt man nun dafür, daß die Sägezahnfunktion genügend steil ist, um wenigstens einige Perioden des Cosinus zu durchfahren, kann man aus U– sowohl $\Omega$ und damit die Wellenlänge $\lambda$ der Laserstrahlung als auch $I_k$ bestimmen.

Daraus und aus U+ kann man das Verhältnis von kohärenter zu inkohärenter Strahlung ermitteln. Für den Fall, daß der Laser gepulst oder zeitlich variabel ist, läßt sich mit Hilfe von U+ die Pulsform analysieren. Unter Zuhilfenahme der Information von U– wird festgestellt, daß es sich bei dem Puls auch tatsächlich um denjenigen eines Laser handelt, allerdings ist Voraussetzung dafür, daß die Pulsdauer größer als $I/\Omega$ ist.


**Patentansprüche**

1. Laserwarnempfänger mit Richtungsauflösung und einer Einrichtung zur Detektion von Fremdlicht und einfallender Laserstrahlung, **dadurch gekennzeichnet,** daß diese Einrichtung sich aus zwei über zwei optische Wege miteinander verbundenen 3-dB-Kopplern (1, 4) zusammensetzt, wobei der eine verbindende optische Weg von einer Verzögerungsleitung (3) gebildet wird, während der zweite verbindende optische Weg über einen, von einem Signalgenerator (22) gesteuerten, Phasenschieber (21) führt, und wobei an den beiden Ausgängen (43, 44) eines der Koppler (4) jeweils ein Fotodetektor (5, 6) vorgesehen ist zur Umwandlung der aus diesem als Phasen/Amplituden-Transformer arbeitenden Koppler (4) tretenden, gegeneinander phasenverschobenen Signale in elektrische Signale, wobei Verstärker (7, 8) und eine Auswerteinheit (100) vorgesehen sind zur Verstärkung und Auswertung der von den Fotodetektoren erzeugten elecktrischen Signale.

2. Laserwarnempfänger nach Anspruch 1, **dadurch gekennzeichnet,** daß die Verzögerungsleitung (3) von einer in einer Schleife gelegten Glasfaser gebildet wird.

3. Laserwarnempfänger nach Anspruch 1 oder 2, **dadurch gekennzeichnet,** daß der optische Weg der Verzögerungsleitung (3) länger oder kürzer als der zweite optische Weg ist und die Wegdifferenz (L) der minimalen Kohärenzlänge der interessierenden Lasertypen entspricht.

4. Laserwarnempfänger nach den Ansprüchen 1 bis 3, **dadurch gekennzeichnet,** daß die zeitliche Änderung der Sägezahnfunktion $(\Delta n(t))$ des vom Signalgenerator (22) gesteuerten Phasenschiebers (21) auf einer integriert-optischen Schaltung auf Li Nb $O_3$ erfolgt.

5. Laserwarnempfänger nach den Ansprüchen 1 bis 3, **dadurch gekennzeichnet,** daß zur Änderung der Sägezahnfunktion und der Länge (1) des Phasenschiebers (21) eine auf einem Piezokristall aufgespannte Glasfaser verwendet wird.


**Claims**

1. Laser warning receiver with directional resolution and a device for detection of external light and incidental laser radiation, **characterised in that** this device comprises two 3db couplers (1, 4) which are interconnected via two optical paths, and that the one connecting optical path is formed by a delay line (3) whilst the second connecting optical path leads via a phase shift (21) which is controlled by a signal generator (22), and that at both outlets (43, 44) of one of the couplers (4) is provided a respective photo detector (5, 6) for conversion of signals, which exit from the coupler (4) serving as phase/amplitude transformer and which are phase displaced relative to each other, into electrical signals, with amplifiers (7, 8) and an evaluation unit (100) provided for amplification and evaluation of the electrical signal produced by the photo detectors.

2. Laser warning receiver according to claim 1, **characterised in that** the delay line (3) is formed by a looped glass fibre.

3. Laser warning receiver according to claim 1 or 2, **characterised in that** the optical path of the delay line (3) is longer or shorter than the second optical path, and that the path difference (L) corresponds with a minimum coherence length of the interested laser types.

4. Laser warning receiver according to claims 1 to 3, **characterised in that** a time change of the sawtooth function $(\Delta n(t))$ of the phase shift (21), which is controlled by the signal generator (22), is carried out on an integral-optical circuit of Li Nb $O_3$.

5. Laser warning receiver according to claims 1 to 3, **characterised in that** a glass fibre attached to a piezo crystal is used for the purpose of changing the sawtooth function and the length (1) of the phase shift (21).

## Revendications

1. Détecteur d'alerte laser à détermination de direction comportant un dispositif de détection de la lumière secondaire et du rayonnement laser incident, caractérisé par le fait que ledit dispositif est constitué par deux coupleurs 3 dB (1, 4) qui sont reliés entre eux par l'intermédiaire de deux trajets optiques, l'un des trajets optiques de liaison étant constitué par une ligne de retard (3) et le deuxième trajet optique de liaison passant par un déphaseur (21 piloté par un générateur de signal, un photo-détecteur (5, 6) étant prévu à chacune de deux sorties (43, 44) de l'un des coupleurs (4) pour transformer en signaux électriques les signaux mutuellement déphasés qui sortent du coupleur (4) travaillant en convertisseur phase/amplitude, un amplificateur (7, 8) et une unité d'exploitation (100) étant prévus pour l'amplification et l'exploitation des signaux électriques produits par les photo-détecteurs.

2. Détecteur d'alerte laser selon la revendication 1, caractérisé par le fait que la ligne de retard (3) est constituée par une fibre optique disposée en boucle.

3. Détecteur d'alerte laser selon la revendication 1 ou 2, caractérisé par le fait que le trajet optique de la ligne de retard (3) est supérieur ou inférieur au second trajet optique et que la différence de trajet (L) correspond à la longueur de cohérence mimimale des types de laser concernés.

4. Détecteur d'alerte laser selon les revendications 1 à 3, caractérisé par le fait que la variation dans le temps de la fonction en dent de scie ($\Delta n(t)$) du déphaseur (21) piloté par le générateur de signal (22) est obtenue dans un circuit optique intégré à base de Li Nb O$_3$.

5. Détecteur d'alerte laser selon les revendications 1 à 3, caractérisé par le fait que l'on utilise une fibre de verre fixée sur un cristal piézoélectrique pour faire varier la fonction en dent de scie et la longueur (1) du déphaseur (21).